# EUROPEAN PATENT SPECIFICATION

(11) **EP 3 622 795 B1**
(45) Date of publication and mention of the grant of the patent: **26.10.2022**
(21) Application number: 19192452.1
(22) Date of filing: 20.08.2019
(51) Int. Cl.: A01D 34/49, A01D 43/063, A01D 43/077, A01D 34/43

(54) **CUTTING DEVICE FOR MOWER**
SCHNEIDGERÄT FÜR MÄHMASCHINE
APPAREIL DE COUPE POUR UNE FAUCHEUSE

(30) Priority: 17.09.2018 IT 201800008639
(43) Date of publication of application: 18.03.2020
(73) Proprietor: KUBOTA GIANNI FERRARI S.R.L., 42046 Reggiolo (RE) (IT)
(72) Inventor: FERRARI, Alessio, 46023 GONZAGA (MN) (IT)
(74) Representative: Corradini, Corrado

(56) References cited:
- EP-A1- 0 064 488
- BE-A- 834 978
- DE-A1- 19 607 350
- GB-A- 963 534

## Description

### TECHNICAL FIELD

The present invention relates to the sector of farming machines, and in particular of machines for mowing grass. The present invention was developed with particular regard to a mower, and, more in particular, with regard to a cutting device of a mower.

### PRIOR ART

In the sector of machines able to mow grass, self-propelled mowers are known that are driven by a user sitting aboard them. Mowers of this kind comprise a support frame provided with a plurality of wheels distributed in pairs on a front axle and on a rear axle.

At least one pair of wheels is motorised, so as to provide the vehicle with the necessary traction, and one or more wheels may be steering and be connected to a steering wheel, or to a similar manual control member, which is situated at a driving station provided with a seat for the user.

To the frame of the mower also a grass cutting device is connected anteriorly, commonly called cutting deck, which as a rule comprises one or more oscillating blade with horizontal axis of rotation, brought to a short distance from the ground and covered by a protective case.

Mowers are known, for example like the one described in the document DE19607350, that comprise a system for conveying and collecting cut grass by auxiliary means.

The system for conveying and collecting the cut grass comprises a first auger, with its axis of rotation horizontal and orthogonal to the direction of travel, which receives the grass just cut from the oscillating blades and feeds it to a second auger with an axis of rotation orthogonal to the axis of rotation of the first auger that conveys the grass into a collection basket, situated on the frame of the mower behind the driving station, through a conduit for conveying the grass.

Although the mower described by the patent DE19607350 correctly performs the cutting function, it has a high cost of production and requires particularly onerous maintenance, mainly due to the presence of the second auger for loading grass.

A purpose of the present invention is therefore to overcome the aforementioned drawback within a solution that is rational and has low costs. An additional purpose of the present invention is to make maintenance of a mower simpler and quicker with no need to act on the self-propelled machine.

These purposes are achieved by the features of the invention set forth in the independent claims. The dependent claims outline preferred and/or particularly advantageous aspects of the invention.

### DESCRIPTION OF THE INVENTION

One aspect of the solution in accordance with the present invention makes available a cutting device as defined in claim 1.

Thanks to this solution, it is possible to obtain a cutting device that is simple in construction and quickly maintained. Moreover, the cutting deck, in accordance with this embodiment of the invention, can be associated both with a direct-load mower and a mower provided with a turbine for the collection of grass.

According to the invention, the grass accelerator comprises at least one vane that rotates around an axis of rotation parallel to the axis of rotation of the support shaft 46 so as to promote the evacuation of the cut grass from the cutting deck.

This solution ensures that a grass accelerator is obtained in a very simple and economical manner.

According to the present invention, said grass accelerator comprises a shaft with horizontal axis of rotation to which a plurality of vanes arranged angularly distanced from each other are fixed.

This aspect of the invention, in addition to being simple in construction, is very efficient in the transfer of the cut grass.

Both these solutions assure excellent results in the transfer of the cut grass.

According to the present invention, the auger comprises a shaft, on whose outer surface are obtained two helical surfaces, which leave uncovered a central portion of the shaft, the accelerator being placed in proximity to said central portion.

Thanks to this solution, it is possible further to reduce the total bulk of the cutting deck.

An additional aspect of the present invention provides a motion transmission system of said grass accelerator.

According to the present invention, the shaft of the grass accelerator is parallel to the shaft of the auger, i.e. the axis of rotation of the shaft is parallel to the axis of rotation of the shaft of the auger.

Thanks to this solution, it is possible to position the accelerator, at the outlet of the conveying system, below or posteriorly to the auger.

A further aspect of the solution in accordance with the present invention makes available a self-propelled mower comprising a support frame to which a cutting device as described above is associated.

Another aspect of the present invention comprises a collection basket operatively connected with the outlet for the exit of the cut grass through a conduit for conveying grass.

### BRIEF DESCRIPTION OF THE DRAWINGS

Further features and advantages of the present invention shall be more readily apparent from the description that follows, provided by way of example with reference to the accompanying figures in which:
- Figure 1 is a schematic comprehensive view of a mower comprising a cutting device according to the present invention;
- Figure 2 is a section view of the cutting device according to the trace plane II-II of figure 4;
- Figure 3 is a section view of the cutting device according to the trace plane III-III of figure 4;
- Figure 4 is a plan view of a cutting device not representing the present invention;
- Figure 5 is a plan view of a cutting device not representing the present invention;
- Figure 6 is a section view of the cutting device according to the trace plane VI-VI of figure 5;
- Figure 7 is a plan view of a cutting device according to the present invention; and
- Figure 8 is a section view of the cutting device according to the trace plane VIII-VIII of figure 7.

### BEST EMBODIMENT OF THE INVENTION

The accompanying figures illustrate a self-propelled mower 10 of the type able to be driven by a user sitting aboard it.

The mower 10 comprises a support frame 20, on which a plurality of wheels bearing on the ground, whereof a pair of front wheels 21 placed coaxial on a front axle, and a pair of rear wheels 22 placed coaxial on a rear axle are installed.

The support frame 20 of the mower 10 has a longitudinal axis that defines a direction of advance of the mower itself.

In the front part of the support frame 20 a driving station comprising a seat 25 fixed above a platform 26 of the support frame 20 is placed.

In the rear part of the support frame 20, behind the seat 25, a collecting basket 50, in which the cut grass is accumulated, is placed.

To the support frame 20, a cutting device 40 comprising a frame 60, engaged at its rear end 62 to the support frame, is frontally connected. The frame 60 is preferably connected articulated to the support frame 20, to allow the cutting device 40 to oscillate relative to the support frame 20 and to accommodate, in use, the inclinations of the ground.

The cutting device 40 is provided with at least one front swivel caster 42, for example, but without limitation, engaged to a front portion of the cutting device 40 through at least one connecting arm 43.

The cutting device 40 comprises a front case 64, engaged with the front portion of the frame 60 and facing the front swivel caster 42. The cutting device 40 is further provided with a cutting member 180 comprising a plurality of oscillating blades 44 connected to a support shaft 46 with axis of rotation that is horizontal and orthogonal to a direction of advance of the self-propelled mower, said support shaft 46 being placed inside the frame 60, and rotatably engaged to said frame 60.

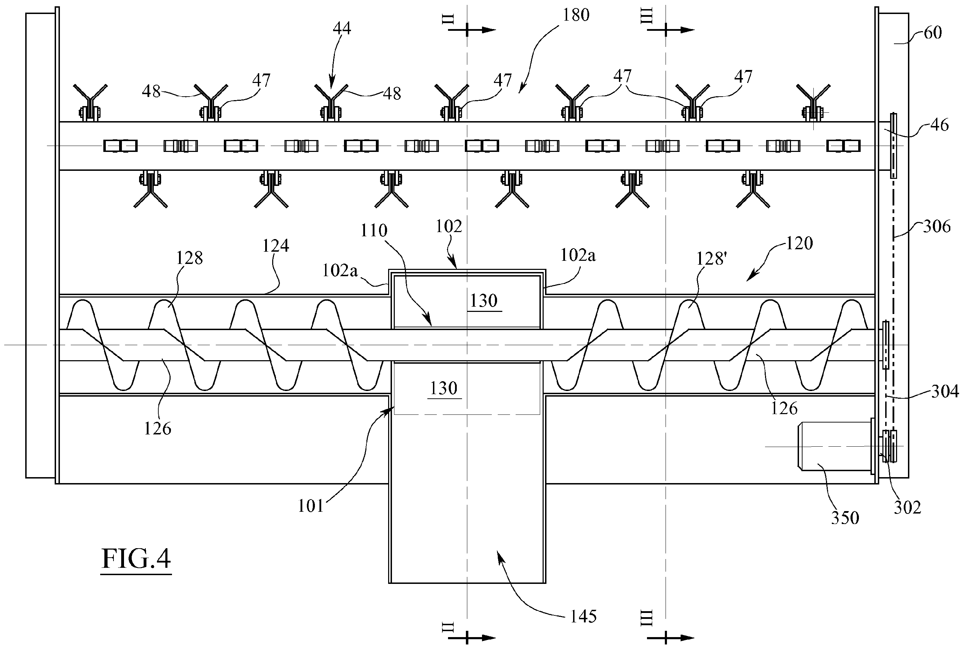

As is more clearly visible in Figure 4, the oscillating blades 44 comprise a plurality of pairs of identical cutters, for example, curved sheet plates. Each pair of curved sheet plates 48 is connected articulated to the support shaft 46 by means of a respective pair of slits 47 projecting radially from the support shaft 46 and an assembly of nut and bolt. The curved sheet plates 48 of each pair of oscillating blades 44 are arranged in such a way that their free ends are mutually diverging.

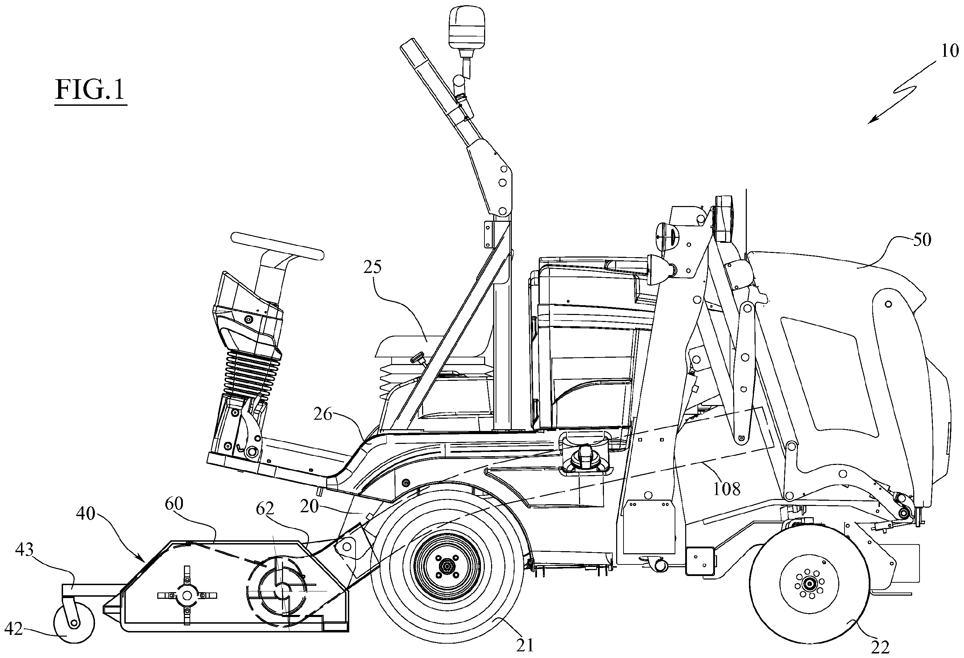

The cutting device 40 further comprises a system 100 for conveying cut grass that comprises at least one opening for the access of the grass cut by the oscillating blades 44 and at least one outlet for the exit thereof. The outlet of the grass conveying system is operatively connected to a grass conveying conduit 108 (drawn with dashed line in Figure 1), placed in the mower 10, and that ends in the collecting basket 50.

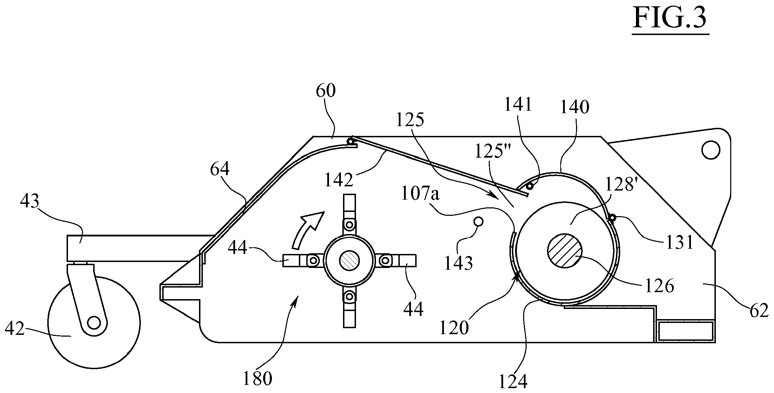

In particular, the system 100 for conveying the cut grass comprises an auger 120 that is housed within a tubular case 124 (Fig. 3), which has an inlet 125 for the entry of the cut grass that develops parallel to the axis of rotation of the cutting member 180, and it is oriented towards the cutting member 180, and an outlet opening 145 (Fig. 4), opposite to the inlet 125 that allows the cut grass to exit from the conveyor 100 and hence from the cutting device 40.

In more detail, the inlet 125 develop substantially over the entire length of the tubular case 124, while the outlet opening 145 of the cut grass is operatively connected to the conveying conduit 108 through which grass is fed to the collecting basket 50.

In detail, the auger 120 has a shaft 126 that is rotatably associated with the case around an axis of rotation parallel to the axis of rotation of the support shaft 46 of the cutting member 180.

On the outer surface of the shaft 126 are obtained two helical surfaces 128, 128', which leave uncovered a central portion 110 of the shaft 126 itself. The two helical surfaces 128, 128' have an opposite inclination, so that, in use, a direction of rotation of the shaft 126 conveys the grass fed to the auger 120 towards the centre at the central portion 110, and an inverse rotation conveys grass towards the two ends.

It is specified that the outlet opening 145 of the tubular case 124 is positioned at the central portion 110 of the auger, as shown for example in Fig. 4. Naturally, different arrangements are possible of the grass conveying system 100, or of the auger 120, with respect to what has been described and illustrated hitherto. For example, but without limitation, it is possible to embody the grass conveying system 100 with two worm screws having helical surfaces with equal inclination and set in rotation according to opposite directions.

The system 100 for conveying the cut grass further comprises a grass accelerator 101 positioned at the portion 110 of the shaft 126 of the auger 120, in proximity to the outlet opening 145, which assures the transport of the cut grass towards the collecting basket 50 through the outlet opening 145 and the conveying tube 108.

The grass accelerator 101 comprises at least one vane 130, positioned at, i.e. facing, the outlet opening 145, which rotates around an axis of rotation parallel to the axis of rotation of the support shaft 46 of the cutting member 180 so as to promote the evacuation of the grass cut by the cutting device 40.

Said at least one vane 130 can be directly fixed to the shaft 126 of the auger 120, for example by a welding process, and develops in tangential direction to the cylindrical outer surface of the shaft 126 of the auger 120. Moreover, the vane 130 has a length, measured in the direction of the central axis of longitudinal rotation of the shaft 126, equal to the length, measured in the same direction, of the outlet opening 145.

In particular, the accelerator 101 has a plurality of vanes 130 angularly distanced from each other and with a length, measured in the direction of the central axis of longitudinal rotation of the shaft 126, equal to the length, measured in the same direction, of the outlet opening 145, and with a width, measured in the direction orthogonal to the length, which is constant and extends in proximity to the inner surface of the tubular case 124. In the representations of the figures, preferably the vanes 130 are planar and have rectangular shape, and are placed tangential to the outer surface of the shaft 126, however, they could assume different shapes and/or be arranged radially with respect to the outer surface of the central shaft.

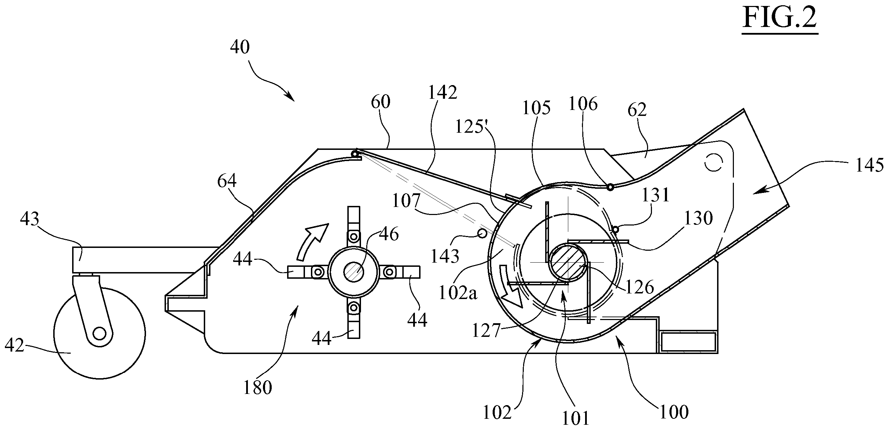

With reference to Figures 2 and 4, it is noted that the tubular case 124 has, at the central portion 110, a widened portion that defines a containment body 102 of the grass accelerator 101.

The containment body 102 has two lateral annular walls 102a, opposite to each other, in each of which a circular opening through which the grass cut is fed from the helical surfaces 128 and 128' of the auger 120 to the vanes 130 of the grass accelerator 101 is obtained.

With reference to Fig. 2, the containment body 102 also has an opening 107, partially occluded by a lid 105 articulated to the containment body 102 by means of a hinge 106. The lid 105 can be displaced from a first position of partial occlusion of the opening 107, in which it still makes possible the entry of the cut grass to the grass accelerator 101 through a section 125' of the opening 125 at the central portion 110, and a second opening position, wherein it makes possible access to the interior of the containment body 102, and hence, to the grass accelerator 101 to perform, for example, maintenance operations.

As is more readily apparent in Figure 3, the tubular case 124 of the auger 120 also comprises two other openings 107a, positioned to the side of the widened central portion of the tubular case 124 that defines the containment body 102.

The two openings 107a develop at the helical surfaces 128 and 128' of the auger 120 and are delimited between the containment body 102 and the frame 60 of the cutting device 40.

To each of the openings 107a, a respective lid 140 that is articulated to the tubular case 124 is associated, through a hinge 131, so as to be able to rotate from a position of partial occlusion of the opening 125, in which it still allows the entry of cut grass in the auger 126 through a section 125" of the opening 125, to an open position, in which it allows access to the auger 120 for maintenance operations. An end stop 141 connected to the frame 60 allows to maintain the lid 140 in the position of partial occlusion and to prevent the total occlusion of the opening 125.

From the above description, it is understood that the access opening 125 consists, in the illustrations, of three sections of which one section 125' at the widened portion of the tubular case 124 and two lateral sections 125", positioned at the surfaces of the helical segments 128 and 128' of the auger 120.

According to a variant not illustrated herein, the tubular case 124 does not have a widened central portion at the central area 110 in which the grass accelerator 101 is situated. In this case the tubular case 124 can have a single opening that develop over the entire axial length of the outer tubular case partially occluded by a single lid, of coupled shape, instead of by the three distinct lids 105 and 140 described above.

Naturally, a person skilled in the art will also easily be able to identify a different number and arrangement of vanes 130, as well as a different mechanism for connecting the vanes 130 to the shaft 126 of the auger 120. Similarly, a person skilled in the art will be able to identify a different arrangement of grass accelerator 101 without thereby departing from the scope of the present invention, so long as said grass accelerator is placed in proximity to the outlet opening 145 of cut grass.

The cutting device 40 further comprises a movable wall 142 connected articulated, thanks to a hinge 150, at its first end to the front case 64 and/or to the frame 60. In use, the movable wall 142 can be rotated between a first operating position in which it makes possible the passage of cut grass, through the opening 125, inside the tubular case 124 and of the containment body 102 of the grass accelerator 101, and a second operating position (indicated with dashed lines in Figure 2) in which it prevents the feeding of the cut grass to the system 100 for conveying the cut grass. An end stop 143 prevents the movable wall 142 from rotating further and interfering with the oscillating blades 44 of the cutting member 180. When the movable wall 142 is in the second operating position, the grass cut by the oscillating blades 44 is directly unloaded to the ground.

As is more clearly visible in Figure 4, the support shaft 46 of the oscillating blades 44 and the shaft 126 are both connected to a single motion transmission system comprising, for example, a motor member 350 provided with a drive shaft 302 to which is engaged a first belt 304 operatively connected to the shaft 126 and a second belt 306 operatively connected to the support shaft 46.

The motion transmission system can naturally be of numerous different types known to persons skilled in the art. For example, the motion transmission system can allow a synchronised rotation of the auger 120, of the grass accelerator 101 and of the cutting member 180 or, more preferably, it can allow a rotation of the cutting member 180 at a higher speed than the speed of rotation of the auger 120 and of the grass accelerator 101.

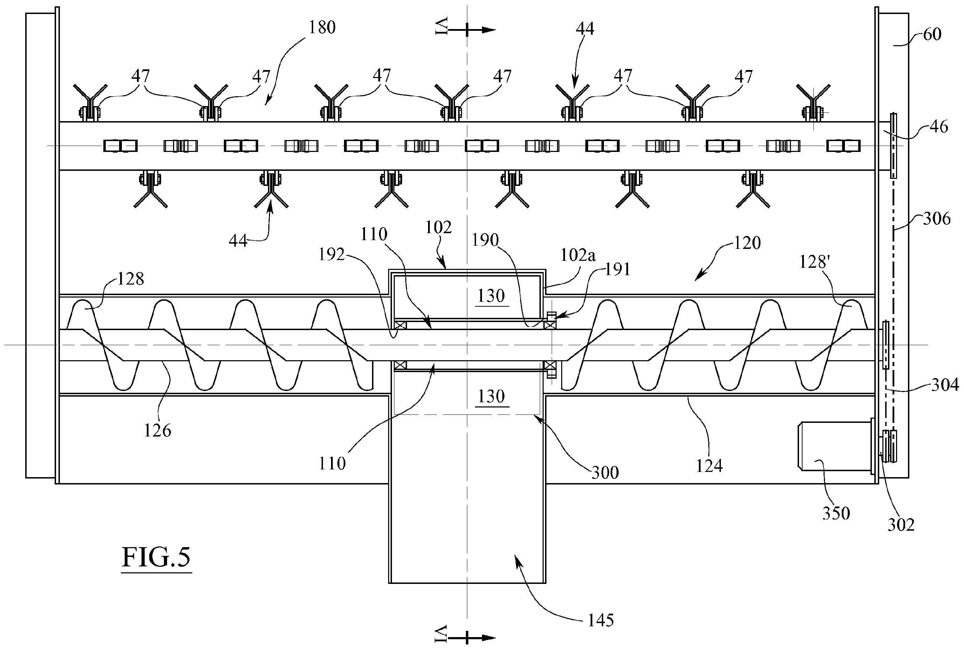

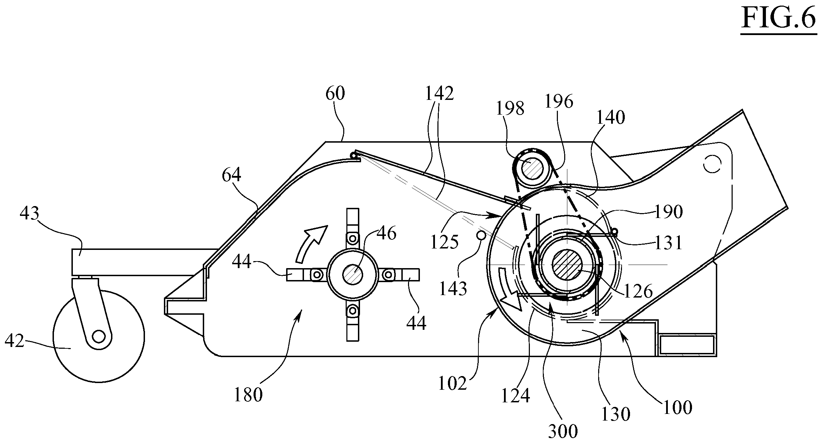

Figures 5 and 6 illustrate a second arrangement not according to the invention. It is specified that, in the description of this arrangement, the same numerical references are used to designate identical components, already described in the first representation.

The second arrangement differs from the previous one with regard to the grass accelerator. In particular, in the second arrangement a grass accelerator 300 is provided, which comprises a cylindrical shaft 190, mounted coaxial externally to the shaft 126 of the auger 120 at the central portion 110 of the shaft 126, i.e. in the portion of shaft 126 lacking helical surfaces 128, 128'.

In particular, the shaft 190 of the grass accelerator 101 is mounted on the shaft 126 of the auger 120 with the interposition of rolling bearings 192, which allow the shaft 190 to rotate freely on the shaft 126.

To the shaft 190, the vanes 130, of planar and with rectangular shape, are fixed and are placed tangential to the outer surface of the shaft 190, however, they could assume different shapes and/or be arranged radially with respect to the outer surface of the central shaft.

According to this arrangement, the shaft 126 and the shaft 190 are connected to distinct motion transmission systems, so that, in use, the shaft 126 and the shaft 190 can rotate at different speeds and/or can be actuated independently from each other.

In particular, at one end of the shaft 190 is integrally fixed a gear 191, engaged to a motion distribution system comprising a belt or chain 196 and an additional rotor shaft 198 or pulley.

The auger 120 and the containment body 102 of the grass accelerator 101 comprise the same technical features of the auger 120 and of the containment body 102 previously described, and these features are incorporated by reference herein. Similarly, the cutting device 40 comprises a closing case comprising the same technical features of the closing case 142 previously described, and these features are incorporated by reference herein.

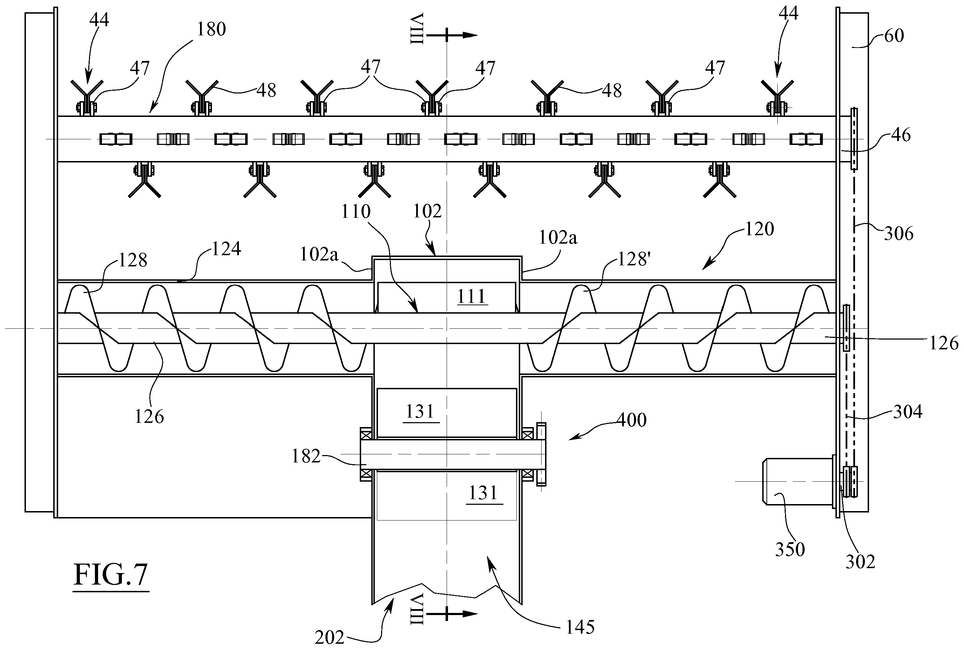

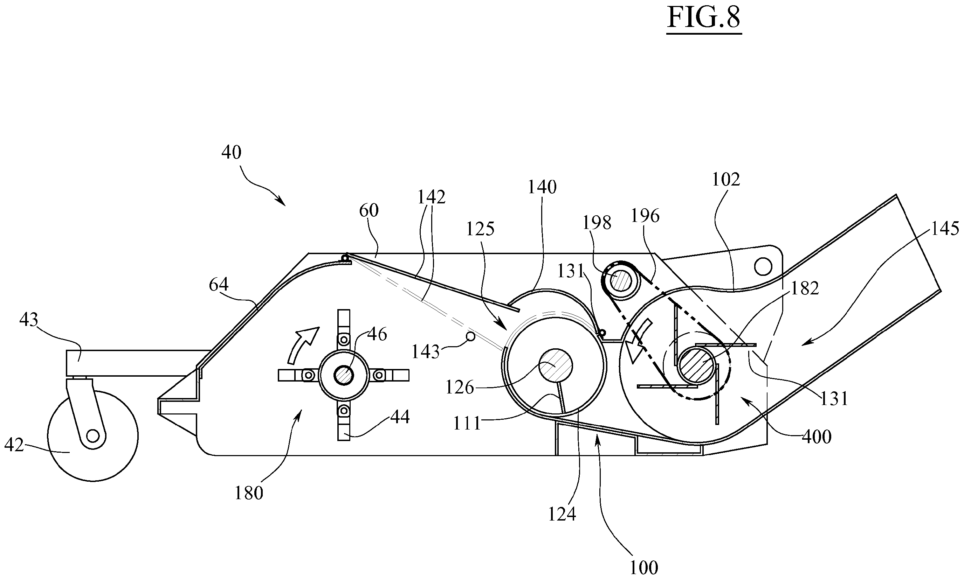

Figures 7 and 8 illustrate an additional embodiment of the invention. It is specified that, in the description of this embodiment of the invention, the same numerical references are used to designate identical components, already described above.

This embodiment of the invention is differentiated from the previous arrangements since it comprises a grass accelerator 400, placed at the outlet opening 145 of the tubular case 124 of the auger 120, and positioned on an axis parallel and distinct from the axis of the auger 120. In the illustrated embodiment the grass accelerator 400 is positioned posteriorly to the auger and positioned orthogonal to a direction of advance of the mower 10, but in different embodiments it can be positioned below the auger always in proximity to the outlet opening 145 of the tubular case 124 of the auger 120, which according to these embodiments will be situated on the lower surface of the tubular case 124.

In particular, the grass accelerator 400 comprises a plurality of vanes 131 with radial development, arranged angularly distanced from each other, and fixed to a cylindrical shaft 182, with horizontal axis of rotation, parallel and distinct from the axis of rotation of the shaft 126 of the auger 120.

The vanes 131 have the same technical features of the vanes 130 previously described, and these features are incorporated by reference herein. For examples, the vanes 131 are planar and with rectangular shape and can be placed tangential to the outer surface of the shaft 182; however, in other embodiments of the invention, the vanes 131 could assume different shapes and/or be arranged radially with respect to the outer surface of the central shaft.

According to the embodiment just described, the shaft 126 and the shaft 182 can be connected to distinct motion transmission systems, so that, in use, they can be actuated independently from each other.

For example, but without limitation, the shaft 182 of the grass accelerator 400 is connected to a motion distribution system comprising a motor member (not shown), a belt or chain 196 and an additional rotor shaft 198.

The cutting member 180 and the shaft 126 of the auger 120 can, instead, both be connected to a single motion transmission system like the one described above.

In addition, according to this embodiment of the invention, since the vanes 131 are distanced from the central portion 110 of the shaft 126 of the auger 120, in which the grass transported by the helical surfaces 128 and 128' gathers, it is preferable that at least an additional vane 111 be fixed on said central portion 110. In this way, the rotation of the vane 11, actuated by the auger shaft 120, allows to push the cut grass towards the accelerator 101. Naturally, a person skilled in the art will be able to find different configurations and embodiments of the motion distribution systems without thereby departing from the scope of the present invention as defined by the claims.

Similar, the materials used, as well as their shapes and dimensions, can be of any type according to the requirements without thereby departing from the scope of protection of the following claims.

## Claims

1. Cutting device (40) configured to be associated with a self-propelled mower (10), wherein the cutting device comprises:
- a cutting member (180) comprising a plurality of oscillating blades (44) for cutting grass fixed to a support shaft (46), rotating with an axis of rotation that is horizontal and orthogonal to a direction of advance of the mower;
- a system (100) for conveying the cut grass that comprises an auger (120) having a shaft (126) with axis of rotation parallel to the axis of rotation of the support shaft (46), and provided with at least one access opening (125) for feeding the cut grass, from the oscillating blades (44), to the auger (120) and at least one outlet opening (145) of the cut grass,
wherein two helical surfaces (128, 128') are obtained on an outer surface of the shaft (126) of the auger, the helical surfaces (128, 128') leaving a central portion (110) of the shaft (126) of the auger uncovered,
wherein the system (100) for conveying cut grass further comprises a grass accelerator (400) positioned at the central portion (110) of the shaft (126) of the auger (120) to face the outlet opening (145) of the cut grass,
**characterised in that** said grass accelerator (400) comprises a shaft (182) with horizontal axis of rotation, parallel and distinct from the axis of rotation of the shaft (126) of the auger (120), and a plurality of vanes (131) fixed to the shaft (182) of the grass accelerator (400) and arranged angularly distanced from each other.

2. Cutting device (40) according to claim 1, **characterised in that** said vanes (131) are fixed tangentially to the outer surface of the shaft (182) of the grass accelerator (400).

3. Cutting device (40) according to claim 1, **characterised in that** said vanes (131) are fastened radially to the outer surface of the shaft (182) of the grass accelerator (400).

4. Cutting device (40) according to claim 1, **characterised in that** it comprises a motion transmission system (196, 198) of said grass accelerator (400).

5. Cutting device (40) according to claim 1, **characterised in that** it comprises at least an additional vane (111) fixed on the central portion (110) of the shaft (126) of the auger (120).

6. A self-propelled mower (10) comprising a support frame (20) to which is associated a cutting device (40) according to any of the preceding claims.

7. A mower according to claim 6, **characterised in that** it comprises a collection basket (50) operatively connected with at least the outlet opening (145) for the exit of the cut grass through a conduit (108) for conveying grass.

## Patentansprüche

1. Schneidvorrichtung (40), die konfiguriert ist, um mit einem selbstfahrenden Mäher (10) assoziiert zu sein, wobei die Schneidvorrichtung Folgendes umfasst:
- ein Schneidelement (180), umfassend eine Vielzahl von oszillierenden Schneiden (44) zum Schneiden von Gras, die an einer Trägerwelle (46) befestigt sind, das mit einer Drehachse dreht, die horizontal und orthogonal zu einer Vorlaufrichtung des Mähers ist;
- ein System (100) zum Fördern des geschnittenen Grases, umfassend eine Schnecke (120), die eine Welle (126) aufweist, deren Drehachse parallel zu der Drehachse der Trägerwelle (46) ist, und das mit mindestens einer Zugangsöffnung (125) zum Zuführen des geschnittenen Grases von den oszillierenden Schneiden (44) zu der Schnecke (120), und mindestens einer Auslassöffnung (145) für das geschnittene Gras versehen ist,
wobei zwei schraubenförmige Oberflächen (128, 128') auf einer äußeren Oberfläche der Welle (126) der Schnecke erlangt werden, wobei die schraubenförmigen Oberflächen (128, 128') einen mittleren Abschnitt (110) der Welle (126) der Schnecke unbedeckt lassen,
wobei das System (100) zum Fördern von geschnittenem Gras ferner einen Grasbeschleuniger (400) umfasst, der an dem mittleren Abschnitt (110) der Welle (126) der Schnecke (120) positioniert ist, um gegenüber der Auslassöffnung (145) des geschnittenen Grases zu sein,
**dadurch gekennzeichnet, dass** der Grasbeschleuniger (400) eine Welle (182) mit horizontaler Drehachse, die parallel und verschieden von der Drehachse der Welle (126) der Schnecke (120) ist, und eine Vielzahl von Schaufeln (131), die an der Welle (182) des Grasbeschleunigers (400) befestigt und winklig voneinander beabstandet angeordnet sind, umfasst.

2. Schneidvorrichtung (40) nach Anspruch 1, **dadurch gekennzeichnet, dass** die Schaufeln (131) tangential an der äußeren Oberfläche der Welle (182) des Grasbeschleunigers (400) befestigt sind.

3. Schneidvorrichtung (40) nach Anspruch 1, **dadurch gekennzeichnet, dass** die Schaufeln (131) radial an der äußeren Oberfläche der Welle (182) des Grasbeschleunigers (400) befestigt sind.

4. Schneidvorrichtung (40) nach Anspruch 1, **dadurch gekennzeichnet, dass** sie ein Bewegungsübertragungssystem (196, 198) des Grasbeschleunigers (400) umfasst.

5. Schneidvorrichtung (40) nach Anspruch 1, **dadurch gekennzeichnet, dass** sie mindestens eine zusätzliche Schaufel (111) umfasst, die an dem mittleren Abschnitt (110) der Welle (126) der Schnecke (120) befestigt ist.

6. Selbstfahrender Mäher (10), umfassend einen Trägerrahmen (20), mit dem eine Schneidvorrichtung (40) nach einem der vorhergehenden Ansprüche assoziiert ist.

7. Mäher nach Anspruch 6, **dadurch gekennzeichnet, dass** er einen Sammelkorb (50) umfasst, der funktionsfähig mit mindestens der Auslassöffnung (145) für den Austritt des geschnittenen Grases durch einen Kanal (108) zum Fördern von Gras verbunden ist.

## Revendications

1. Dispositif de coupe (40) configuré pour être associé à une tondeuse auto-propulsée (10), dans lequel le dispositif de coupe comprend :
- un élément de coupe (180) comprenant une pluralité de lames oscillantes (44) permettant de couper l'herbe, fixées à un arbre de support (46), tournant avec un axe de rotation horizontal et orthogonal par rapport à un sens d'avancement de la tondeuse ;
- système (100) de transport de l'herbe coupée comprenant une vis sans fin (120) ayant un arbre (126) et un axe de rotation parallèle à l'axe de rotation de l'arbre de support (46), et pourvu d'au moins une ouverture d'accès (125) permettant de faire passer l'herbe coupée, des lames oscillantes (44) à la vis sans fin (120) et d'au moins une ouverture de sortie (145) de l'herbe coupée,
dans lequel deux surfaces hélicoïdales (128, 128') sont obtenues sur une surface extérieure de l'arbre (126) de la vis sans fin, les surfaces hélicoïdales (128, 128') laissant une partie centrale (110) de l'arbre (126) de la vis sans fin non couverte,
dans lequel le système (100) permettant de transporter l'herbe coupée comprend en outre un accélérateur d'herbe (400) positionné au niveau de la partie centrale (110) de l'arbre (126) de la vis sans fin (120) pour faire face à l'ouverture de sortie (145) de l'herbe coupée,
**caractérisé en ce que** ledit accélérateur d'herbe (400) comprend un arbre (182) avec un axe de rotation horizontal, parallèle et distinct de l'axe de rotation de l'arbre (126) de la vis sans fin (120), et une pluralité d'aubes (131) fixées à l'arbre (182) de l'accélérateur d'herbe (400) et disposées à distance angulaire les unes des autres.

2. Dispositif de coupe (40) selon la revendication 1, **caractérisé en ce que** lesdites aubes (131) sont fixées de manière tangentielle à la surface extérieure de l'arbre (182) de l'accélérateur d'herbe (400).

3. Dispositif de coupe (40) selon la revendication 1, **caractérisé en ce que** lesdites aubes (131) sont fixées de manière radiale à la surface extérieure de l'arbre (182) de l'accélérateur d'herbe (400).

4. Dispositif de coupe (40) selon la revendication 1, **caractérisé en ce qu'**il comprend un système de transmission de mouvement (196, 198) dudit accélérateur d'herbe (400).

5. Dispositif de coupe (40) selon la revendication 1, **caractérisé en ce qu'**il comprend au moins une aube supplémentaire (111) fixée sur la partie centrale (110) de l'arbre (126) de la vis sans fin (120).

6. Tondeuse auto-propulsée (10) comprenant un châssis de support (20) auquel est associé un dispositif de coupe (40) selon l'une quelconque des revendications précédentes.

7. Tondeuse selon la revendication 6, **caractérisée en ce qu'**elle comprend un panier de collecte (50) relié de manière opérationnelle à au moins l'ouverture de sortie (145) pour permettre à l'herbe coupée de sortir à travers un conduit (108) de transport de l'herbe.
